# EUROPÄISCHE PATENTSCHRIFT

(11) **EP 4 526 079 B1**
(45) Veröffentlichungstag und Bekanntmachung des Hinweises auf die Patenterteilung: **27.08.2025**
(21) Anmeldenummer: 24709668.8
(22) Anmeldetag: 01.03.2024
(51) Int. Cl.: B24B 7/02, B24B 49/12

(54) **FLACHSCHLEIFMASCHINE MIT LASER-POSITIONSMESSUNG IN DER LÄNGSACHSE**
FLAT GRINDING MACHINE WITH LASER POSITION MEASUREMENT IN THE LONGITUDINAL AXIS
RECTIFIEUSE PLANE À MESURE DE POSITION LASER SELON L'AXE LONGITUDINAL

(30) Priorität: 08.03.2023 DE 102023105728
(43) Veröffentlichungstag der Anmeldung: 26.03.2025
(73) Patentinhaber: ZIERSCH GMBH, 98693 Ilmenau (DE)
(72) Erfinder: ZIERSCH, Frank, 2520 La Neuveville (CH)
(74) Vertreter: Engel, Christoph Klaus
(86) Internationale Anmeldenummer: PCT/EP2024/055386
(87) Internationale Veröffentlichungsnummer: WO 2024/184229

(56) Entgegenhaltungen:
- EP-A1- 2 572 827
- WO-A1-2013/185603
- WO-A1-2022/065283
- CN-U- 217 143 434

## Beschreibung

Die Erfindung betrifft eine Flachschleifmaschine mit einem Maschinengestell, einem in einer X-Richtung hin- und herbewegbaren Werkstücktisch und einer rotierbaren Schleifscheibe, die in einer Z-Richtung verlagerbar ist.

Für die Bearbeitung unterschiedlichster Werkstücke und Oberflächen werden seit Jahrzehnten Schleifmaschinen eingesetzt. Es gibt mehrere Bauformen von Schleifmaschinen, deren bewegte Achsen und Maschinentische an die spezifischen Schleifaufgaben angepasst sind.

Aus der DE 22 55 724 A ist eine Vorrichtung für die Steuerung eines hin- und hergehenden Werkzeugmaschinenschlittens bekannt, die insbesondere bei einer sogenannten Flachschleifmaschine zum Einsatz kommt. Die Steuerungsvorrichtung wirkt auf einen Schleifschlitten der Maschine ein und besitzt eine Hydraulikdruckversorgung, ein mit dieser Druckversorgung verbundenes Proportional-Magnetventil, einen Betätigungszylinder für die Positionierung des Schlittens, der an den Ausgang des Magnetventils angeschlossen ist. Weiterhin sind Mittel zur Bestimmung der Schlittenposition und -geschwindigkeit sowie Mittel zur Voreinstellung der Hubamplitude und -geschwindigkeit des Schlittens vorgesehen. Elektronische Messkreise werden durch die Mittel zur Bestimmung und Voreinstellung so gesteuert, dass mit ihnen das Öffnen des Magnetventils in Abhängigkeit vom Positionierungsfehler und der Geschwindigkeitsabweichung des Schlittens gesteuert werden kann.

Die DE 26 45 074 A1 beschreibt eine Flachschleifmaschine mit einem zur Aufnahme von Werkstücken bestimmten und gegenüber einem die Schleifscheibe tragenden Kopf mittels eines Antriebes hin- und herfahrbaren Tisch. Der Antrieb umfasst einen mit seinen Enden am Tisch befestigten Zahnriemen. Bei einer Ausführungsform dieser Maschine besitzt der Antrieb einen Thyristorverstärker und drei Endschalter, von denen zwei als absolute Wegbegrenzung für den Tisch dienen und der dritte etwa in der Mitte des Verfahrweges des Tisches angeordnet ist. Zum Betätigen der drei Endschalter ist am Tisch eine Kontaktnocke befestigt.

In der DE 30 41 491 C2 ist eine Umsteuereinrichtung für den hydraulischen Antrieb eines in einem Maschinenbett einer Flachschleifmaschine bewegbaren Werkstücktisches gezeigt. Der Tisch ist mit einem doppelt wirkenden Hydraulikzylinder gekoppelt und steht in Wirkverbindung mit einem am Maschinenbett befestigten Schalter. Ein von einer Hydraulikpumpe beaufschlagtes Umsteuerventil ist mit dem Hydraulikzylinder über Hydraulikleitungen verbunden und wird von einer elektronischen Steuerung gesteuert. In der Maschinenbettmitte sind berührungslosen Schalter angeordnet.

In der EP 0 614 724 A2 ist eine Werkzeugmaschine gezeigt, welche ein Maschinengestell, einen am Maschinengestell angeordneten Werkstückträger für ein zu bearbeitendes Werkstück, einen am Maschinengestell angeordneten Werkzeugträger zur Aufnahme eines Werkzeugs und mindestens einen Antrieb mit einem Schlitten zur Durchführung einer Relativbewegung zwischen dem Werkzeug und dem Werkstück umfasst. Der Antrieb besitzt zwei parallel zur Achse ausgerichtete, in einer Querrichtung im Abstand voneinander angeordnete elektrische Linearmotoren. Der Schlitten erstreckt sich zwischen den beiden Linearmotoren. Eine Steuerung steuert die Linearmotoren gleichzeitig, um den Schlitten zu verfahren.

Die CN 217 143 434 U beschreibt ein Hochgeschwindigkeits-Bearbeitungszentrum zum Schleifen von Messerspitzen. Das Hochgeschwindigkeits-Bearbeitungszentrum besitzt ein Drehbankbett, einen Werkstückschiebetisch, eine Werkstück-Hauptwelle, eine Werkstückspindel-Antriebseinrichtung, eine Schleifbearbeitungseinrichtung und eine Lasermesseinrichtung.

Die DE 10 2012 212 333 A1 beschreibt ein Verfahren und eine Vorrichtung zum Bestimmen eines Maßes einer Dicke eines Polierkissens einer Poliermaschine.

Die WO 2022/065283 A1 beschreibt eine Bearbeitungsmaschine mit einem Antrieb, einer Kamera, einer Bildverarbeitungseinrichtung und einer Steuereinrichtung. Der Antrieb bewegt ein Werkstück und ein Werkzeug relativ zueinander in einer ersten Richtung. Die Kamera nimmt das Werkzeug in der ersten Richtung auf, um ein Bild zu erhalten. Die Bildverarbeitungseinrichtung identifiziert die Position des Werkzeugs in der ersten Richtung auf der Grundlage der Klarheit des Werkzeugs im Bild. Die Steuereinrichtung steuert den Antrieb auf der Grundlage der von der Bildverarbeitungseinrichtung ermittelten Position des Werkzeugs in der ersten Richtung.

Aus der EP 2 572 827 A1 ist eine präzisionsgeführte Transfervorrichtung bekannt, umfassend eine Basis; einen von der Basis getragenen Tisch; eine rohrförmige Stange, die über ein Gelenk mit einer Seite des Tisches verbunden ist; einen Antriebsmechanismus, der die Stange vorwärts und rückwärts bewegt; und ein Laserinterferometer, das die Verschiebung des Tisches relativ zur Basis erfasst. Das Gelenk wird durch eine Zuführungs-/Entladungsverbindung mit statischem Druck bereitgestellt und umfasst: eine Bewegungsfläche, die mit dem Tisch verbunden ist und orthogonal zu einer Bewegungsrichtung des Tisches ist; eine Antriebsfläche, die mit der Stange verbunden ist und der Bewegungsfläche gegenüberliegt; und einen Fluidzuführungskanal, der Fluid zu einem statischen Druckspalt zwischen der Bewegungsfläche und der Antriebsfläche zuführt. Das Laserinterferometer umfasst einen Laserpfad mit einer optischen Achse entlang der Bewegungsrichtung, der durch das Innere des Stabes, dessen Druck reduziert ist, und die Antriebsfläche verläuft und auf der Bewegungsfläche reflektiert wird.

Die WO 2013/185603 A1 zeigt ein symmetrisches Dual-Spindel-Schleifsystem. Ein Arbeitstisch mit einem Drehtisch ist auf einem ersten Schlitten angeordnet, der an einer vorderen Basis befestigt ist. Ein erster und ein zweiter Ständer sind in Form eines Portals auf einem hinteren Sockel angebracht. Ein horizontaler Schleifkopf ist mit einem zweiten Schlitten zwischen den aufrechten Pfosten verbunden. Ein dritter linker Schlitten und ein dritter rechter Schlitten sind gleitend mit dem ersten bzw. zweiten Pfosten verbunden. Ein linker und ein rechter Schlitten sind mit dem dritten linken bzw. dem dritten rechten Schlitten verbunden. Am vorderen Ende des rechten Schlittens ist ein vertikaler Schleifkopf angebracht. Eine automatische Werkzeugwechselvorrichtung ist mit dem vertikalen Schleifkopf ausgestattet, und eine Schleifscheibenprofil-Abrichtvorrichtung kann auf dem zweiten Schlitten und dem linken Schlitten installiert werden.

Die in der Praxis aktuell genutzten Flachschleifmaschinen verwenden seit langer Zeit zur Begrenzung und Steuerung der Bewegung des Werkstücktisches entlang seiner Längsachse (X-Richtung) zwei oder mehrere Endlagenschalter, deren Position in X-Richtung einstellbar ist. Da die Genauigkeitsanforderungen für die hin- und hergehende Bewegung des Tisches gering sind, verzichtet man auf teure Glasmaßstäbe, wie sie beispielsweise für die Steuerung der Bewegung der Schleifscheibe in Z-Richtung eingesetzt werden. Die stattdessen genutzten Endlagenschalter haben aber den Nachteil, dass der Wartungs- und Reinigungsaufwand hoch sein kann, da beim Schleifprozess Späne und Kühlmittel in großen Mengen auftreten. Außerdem besteht ein hohes Risiko für den Maschinenbediener, wenn er während eines laufenden Schleifvorgangs versucht, die Endlagenschalter neu zu positionieren, denn deren Betätigungsköpfe befinden sich regelmäßig im Bewegungsbereich des teils schnell laufenden Werkstücktisches. Schließlich fehlt es häufig an einer unmittelbaren Einbindung der Steuerung der Bewegung des Tisches in die zentrale Steuereinheit der Maschine, welche beispielsweise die Zustellung der Schleifscheibe steuert.

Eine Aufgabe der Erfindung besteht ausgehend vom Stand der Technik darin, eine insbesondere hinsichtlich der erzielbaren Bearbeitungsgeschwindigkeit, Effizienz und Bediensicherheit verbesserte Flachschleifmaschine bereitzustellen, die eine präzise, wartungsarme, sichere und einfache Erfassung und Einstellung der Bewegung des Werkstücktisches in X-Richtung gestattet.

Diese Aufgabe wird gelöst durch eine Flachschleifmaschine gemäß dem beigefügten Anspruch 1.

Die erfindungsgemäße Flachschleifmaschine besitzt zunächst ein Maschinengestell, welches ein Maschinenbett mit einem sich in einer X-Richtung erstreckenden Führungsschacht umfasst. Weiterhin ist ein beweglicher Werkstücktisch vorgesehen, der angetrieben von einem Tischantrieb in dem Führungsschacht des Maschinenbetts in X-Richtung hin- und herbewegbar ist. Eine nach oben gerichtete Öffnung des Führungsschachts, in welcher sich ein unterer Teil des Werkstücktischs in der X-Richtung verschieben kann, ist jeweils seitlich angrenzend an den Werkstücktisch durch eine Abdeckung abgedeckt. Die Abdeckung verschließt die obere Öffnung des Führungsschachts, sodass dort kein Schmutz oder dergleichen eindringt und auch die Gefahr des Hineingreifens während des Schleifprozesses vermieden ist. Gleichzeitig ist die Abdeckung so gestaltet, dass die Bewegung des Werkstücktisches in der X-Richtung nicht behindert wird. Die Abdeckung schirmt den Führungsschacht vorzugsweise auch effizient gegen Umgebungslicht ab.

Die Flachschleifmaschine umfasst weiterhin mindestens eine rotierbare Schleifscheibe, die oberhalb des Werkstücktischs positioniert ist und mindestens in einer zur X-Richtung senkrecht verlaufenden Z-Richtung höhenverstellbar ist, um ein auf dem Werkstücktisch einzuspannendes Werkstück zu schleifen.

Schließlich besitzt die Flachschleifmaschine eine Längenmessbaugruppe, die am Maschinengestell im Führungsschacht unterhalb der Ebene der Abdeckung angebracht ist. Diese Längenmessbaugruppe umfasst eine Laserstrahlungsquelle und einen Laserstrahlungssensor. Am beweglichen Werkstücktisch ist ebenfalls unterhalb der Ebene der Abdeckung ein Reflektor angebracht, der die von der Laserstrahlungsquelle in den Führungsschacht emittierte Laserstrahlung zum Laserstrahlungssensor zurück reflektiert. Die Längenmessbaugruppe bestimmt mit einer integrierten oder zugeordneten Prozessoreinheit (die sich auch in einem getrennten Gehäuse befinden kann) aus der Laufzeit der emittierten Laserstrahlung, nämlich auf dem Weg von der Laserstrahlungsquelle zum Reflektor und von diesem zurück zum Laserstrahlungssensor die Position des Werkstücktisches in X-Richtung. Die Laserstrahlung durchläuft den Weg zwischen der Längenmessbaugruppe und dem Reflektor somit doppelt, was bei der Bestimmung der Position des Werkstücktisches zu berücksichtigen ist.

Ein wesentlicher Vorteil der erfindungsgemäßen Flachschleifmaschine besteht darin, dass auf manuell zu positionierende Endlagenschalter komplett verzichtet werden kann. Während der Bearbeitung eines Werkstücks kann die aktuelle Position des Werkstücktischs laufend ermittelt und für die Steuerung der Bewegung des Tischs in der X-Richtung herangezogen werden. Dafür kann eine eigenständige Steuereinheit oder vorzugsweise eine zentrale Steuereinheit der Flachschleifmaschine genutzt werden. Durch den Wegfall der üblichen Endlagenschalter entfällt ein hohes Verletzungsrisiko für den Maschinenbediener, da es keine Veranlassung für ein Hineingreifen in den Bewegungsbereich des Tisches mehr gibt. Außerdem reduziert sich der Wartungsaufwand, da die Endlagenschalter nicht mehr verschmutzen und zahlreiche kleinere Öffnungen, aus denen z. B. Kühlmittel austreten kann, nicht mehr benötigt werden. Das Maschinenbett kann stattdessen als nach unten im wesentlichen geschlossene Wanne gestaltet werden.

Ein bedeutsamer weiterer Vorteil besteht darin, dass die aktuelle Position des Werkstücktischs nunmehr zu jedem Zeitpunkt sehr genau erfassbar ist. Dies ersetzt nicht nur die Umsteuerung des Richtungssinns der Linearbewegung des Tischs zwischen zwei Endlagen, sondern es ermöglicht auch die Änderung der Wegstrecke der Pendelbewegung während einer Bearbeitung eines Werkstücks, ohne dass die Bearbeitung unterbrochen werden muss. Dies verkürzt die Gesamtbearbeitungzeit und ermöglich neue Methoden der Werkstückbearbeitung mit variabler Bewegungsstrecke in der X-Richtung. Vorzugsweise wird das Positionssignal, welches die Längenmessbaugruppe generiert, in die zentrale Steuereinheit der Maschine eingespeist, sodass nun alle Steuer- und Einstellmöglichkeiten der Maschine zentral zusammengefasst sind.

Die Anordnung der kompletten Längenmessbaugruppe unterhalb der Abdeckung schützt sehr gut gegen Verschmutzung und vermeidet das Eindringen von Fremdlicht, sodass keine Messstörungen auftreten.

Das Maschinengestell umfasst vorzugsweise mehrere Maschinenbauteile aus Metallguss. Dadurch werden eine hohes Maschinengewicht sowie eine große Steifigkeit erzielt, was sich positiv auf die erzielbare Bearbeitungsgenauigkeit auswirkt.

Gemäß eine vorteilhaften Ausführungsform ist die Abdeckung des Führungsschachts durch Faltenbälge oder zueinander verschiebbare Platten gebildet. Dies gewährleistet einen guten Schutz gegen eintretende Verschmutzung und ermöglicht gleichzeitig einen schnellen Zugang, zum Führungsschacht falls Reinigungs- oder Wartungsarbeiten erforderlich sind.

Eine weitergebildete Ausführungsform zeichnet sich dadurch aus, dass die Schleifscheibe um eine Rotationsachse rotiert, die in einer Y-Richtung verläuft, welche senkrecht zur X-Richtung und senkrecht zur Z-Richtung verläuft, wobei die Schleifscheibe bevorzugt in dieser Y-Richtung verschiebbar ist. Die Verlagerbarkeit der Schleifscheibe entlang von zwei Achsen erhöht die Einsatzmöglichkeiten der Flachschleifmaschine. Vorzugsweise werden die Verschiebungen entlang der Z-Achse und der Y-Achse durch vorgespannten Linearführungssysteme realisiert, die eine hohe Präzision gestatten.

Der Führungsschacht im Maschinenbett stellt den Raum für die Bewegung des Werkstücktischs in der X-Richtung bereit. Die Führung des Tischs wird bevorzugt durch geschabte und beschichtete Gleitführungen, die sich in X-Richtung erstrecken, realisiert. Dies sorgt für ausgezeichnete Dämpfungseigenschaften und eine hohe Schliffbildgüte am Werkstück. Der Tischantrieb ist vorzugsweise als Hydraulikantrieb ausgebildet, wobei mehrere Hydraulikzylinder an den Werkstücktisch gekoppelt sind. Der hydraulische Antrieb für die Längsbewegung des Werkstücktischs wird besonders bevorzugt mit einem Rückkühlaggregat versehen. Stattdessen werden die Quer- und Senkrechtbewegungen der Schleifscheibe (in Y-Richung und Z-Richtung) bevorzugt durch elektromotorische oder elektromagnetische Antriebe realisiert.

Bei einer besonders bevorzugten Ausführungsform sind die Laserstrahlungsquelle und der Laserstrahlungssensor in einem gemeinsamen Gehäuse untergebracht, welches im Bereich des Führungsschachts am Maschinenbett unter der Abdeckung angebracht ist. Die Quelle und der Sensor befinden sich somit in unmittelbarer Nähe zueinander und sind an einem Teil des Maschinengestells befestigt, an welchem nur minimale Schwingungen und Erschütterungen auftreten, was die Funktionssicherheit der gesamten Baugruppe erhöht.

Die Längenmessbaugruppe umfasst eine Prozessoreinheit, welche die Laserstrahlungsquelle ansteuert, ein Sensorsignal vom Laserstrahlungssensor empfängt und aus der Laufzeit der emittierten Laserstrahlung die Position des Werkstücktisches in X-Richtung bestimmt. Besonders bevorzugt wird als Längenmessbaugruppe eine fertig konfektionierte Laser-Längenmesseinheit genutzt. Diese Einheit muss mit nur wenigen elektrischen Leitungen angeschlossen werden, die nur an nichtbewegten Teilen der Maschine verlegt werden müssen.

Eine zweckmäßige Ausführungsform umfasst eine Abrichteinheit, die auf dem Werkstücktisch montiert ist. Durch die erfindungsgemäß vorhandene Längenmessbaugruppe kann der Werkstücktisch nicht nur in seinen Endlagen genau positioniert werden sondern im gesamten Bewegungsbereich in X-Richtung. Dies ermöglicht eine einfache und schnelle Positionierung der Abrichteinheit, was die Prozesszeiten weiter verkürzen kann und eine hohe Genauigkeit beim Abrichten der Schleifscheibe sicherstellt.

Weitere Vorteile und Einzelheiten der Erfindung ergeben sich aus der nachfolgenden Beschreibung einer bevorzugten Ausführungsform, unter Bezugnahme auf die Zeichnung. Es zeigen:
- Fig. 1: eine vereinfachte Frontalansicht einer erfindungsgemäßen Flachschleifmaschine;
- Fig. 2: eine Sicht von oben in einen Führungsschacht eines Maschinenbetts der Flachschleifmaschine gemäß Fig. 1;
- Fig. 3: eine perspektivische Ansicht eines Werkstücktisches und einer Längenmessbaugruppe.

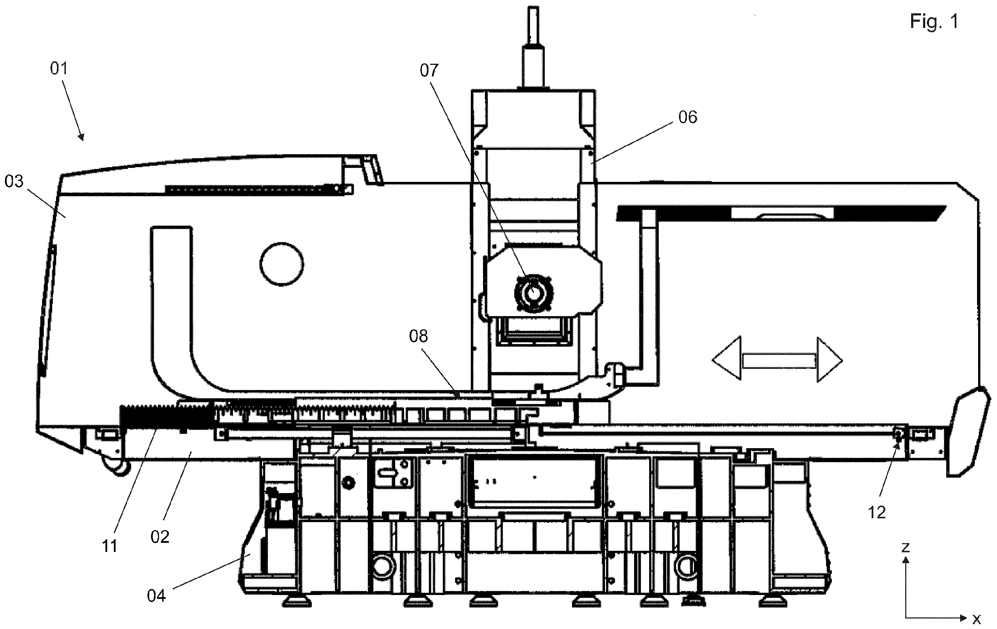

Die Fig. 1 zeigt unter Verzicht auf Einzelheiten eine beispielhafte Ausführungsform einer erfindungsgemäßen Flachschleifmaschine in einer Gesamtansicht von vorn. Die Flachschleifmaschine besitzt ein Maschinengestell 01, welches ein Maschinenbett 02, ein Maschinengehäuse 03 und einen Maschinenfuß 04 umfasst. Das Maschinenbett 02 erstreckt sich längs in einer X-Richtung. An einem Säulenträger 06 ist eine Schleifscheibe 07 angebracht, die mindestens in einer Z-Richtung, vorzugsweise auch in einer Y-Richtung, senkrecht zur X-Richtung verfahrbar ist.

Ein Werkstücktisch 08 ist in X-Richtung hin- und herbewegbar (symbolisiert durch einen Doppelpfeil), wozu er von einem hydraulischen Tischantrieb (nicht gezeigt) angetrieben wird. Die Oberseite des Werkstücktischs, auf welcher ein Werkstück aufgespannt werden kann, ist zur Schleifscheibe 07 gerichtet. Der untere Teil des Tischs 08, einschließlich Führungs- und Antriebselementen, ist in einem Führungsschacht 09 positioniert, der sich im Maschinenbett 02 erstreckt. Die nach oben gerichtete Öffnung des Führungsschachts 09 ist jeweils seitlich angrenzend an den Werkstücktisch 08 durch eine Abdeckung, hier einen Faltenbalg 11 abgedeckt. Die Bewegung des Werkstücktisches 08 in der X-Richtung wird durch den Faltenbalg 11 nicht behindert. Der Führungsschacht ist somit durch den Werkstücktisch und den Faltenbalg gegen das Eindringen von Schmutz von oben gesichert. Außerdem dringt durch den aus lichtundurchlässigem Material gefertigten Faltenbalg kein oder nur sehr wenig Umgebungslicht in den Führungsschacht 09 ein, sodass die Messung mit dem Laserstrahl nicht behindert wird.

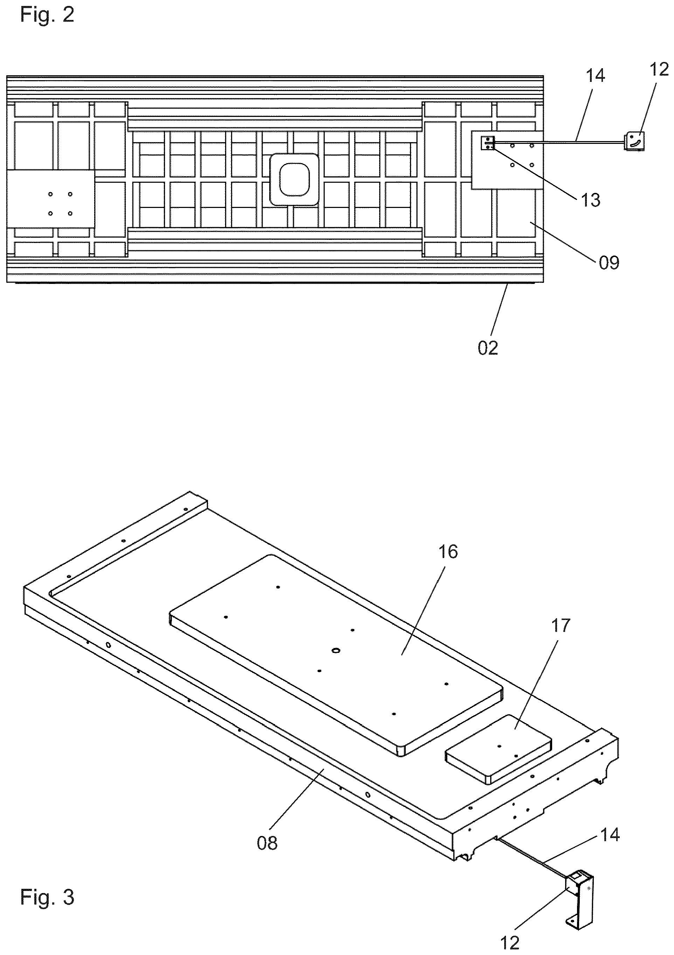

Am Maschinengestell 01, nämlich im Führungsschacht 09 ist unterhalb der Ebene der durch den Faltenbalg 11 gebildeten Abdeckung eine Längenmessbaugruppe 12 angebracht. Die Längenmessbaugruppe 12 umfasst eine Laserstrahlungsquelle und einen Laserstrahlungssensor oder -detektor, die sich in einem gemeinsamen Gehäuse befinden, welches am Maschinengestell angebaut ist, beispielsweise mit Justagemitteln angeschraubt ist. Am Werkstücktisch 08 ist ebenfalls unterhalb der Ebene der Abdeckung 11 ein Reflektor 13 (Fig. 2) angebracht, der die von der Laserstrahlungsquelle emittierte und im Führungsschacht verlaufende Laserstrahlung zurück zum Laserstrahlungssensor reflektiert. Die Längenmessbaugruppe 12 bzw. eine zu dieser gehörende Prozessoreinheit bestimmt in an sich bekannter Weise aus der Laufzeit der emittierten Laserstrahlung, ausgehend von der Quelle über den Reflektor zurück zum Sensor, die Position des Werkstücktisches in X-Richtung relativ zum Maschinengestell und damit relativ zur Schleifscheibe 07.

Fig. 2 stellt eine Sicht von oben in den Führungsschacht 09 dar. Die Zeichnungsebene ist dabei so gewählt, dass der am Werkstücktisch angebrachte Reflektor 13, welcher von oben in den Führungsschacht hineinragt, erkennbar bleibt. Im Betriebsmodus der Maschine verläuft ein Laserstrahl 14 zwischen der am Maschinengestell angebrachten Längenmessbaugruppe 12 und dem Reflektor 13, um den Abstand zwischen diesen beiden Elementen zu messen, woraus sich die Position des Werkstücktisches bestimmen lässt.

Fig. 3 zeigt den Werkstücktisch 08 in einer perspektivischen Ansicht. Ebenso ist die Längenmessbaugruppe 12 dargestellt, nicht jedoch das Maschinengestell, an welchem diese Baugruppe angebracht ist. Es ist ersichtlich, dass der Laserstrahl 14 parallel zum Werkstücktisch 08 verläuft, nämlich in der X-Richtung, in welcher der Werkstücktisch beweglich ist. Für die Bearbeitung ist auf dem Werkstücktisch ein Werkstück 16 eingespannt. Außerdem trägt der Werkstücktisch 08 in dieser Ausführungsform eine Abrichteinheit 17.

### Bezugszeichen

- 01 -: Maschinengestell
- 02 -: Maschinenbett
- 03 -: Maschinengehäuse
- 04 -: Maschinenfuß

- 06 -: Säulenträger
- 07 -: Schleifscheibe
- 08 -: Werkstücktisch
- 09 -: Führungsschacht

- 11 -: Faltenbalg / Abdeckung
- 12 -: Längenmessbaugruppe
- 13 -: Reflektor
- 14 -: Laserstrahl

- 16 -: Werkstück
- 17 -: Abrichteinheit

## Patentansprüche

1. Flachschleifmaschine mit:
- einem Maschinengestell (01), welches ein Maschinenbett (02) mit einem sich in einer X-Richtung erstreckenden Führungsschacht (09) umfasst;
- einem Werkstücktisch (08), der angetrieben von einem Tischantrieb in dem Führungsschacht (09) in X-Richtung hin- und herbewegbar ist;
- einer rotierbaren Schleifscheibe (07), die oberhalb des Werkstücktisches (08) positioniert ist und mindestens in einer zur X-Richtung senkrecht verlaufenden Z-Richtung höhenverstellbar ist, um ein auf dem Werkstücktisch (08) einspannbares Werkstück (16) zu schleifen;
**dadurch gekennzeichnet, dass** die nach oben gerichtete Öffnung des Führungsschachts (09) jeweils seitlich angrenzend an den Werkstücktisch (08) durch eine Abdeckung (11) abgedeckt ist, welche die Bewegung des Werkstücktisches (08) gestattet, dass am Maschinengestell (01) im Führungsschacht (09) unterhalb der Ebene der Abdeckung (11) eine Längenmessbaugruppe (12) angebracht ist, die eine Laserstrahlungsquelle und einen Laserstrahlungssensor umfasst, und dass am Werkstücktisch (08) ebenfalls unterhalb der Ebene der Abdeckung (11) ein Reflektor (13) angebracht ist, der die von der Laserstrahlungsquelle im Führungsschacht emittierte Laserstrahlung (14) zum Laserstrahlungssensor reflektiert, wobei die Längenmessbaugruppe (12) eine Prozessoreinheit umfasst, welche die Laserstrahlungsquelle ansteuert, ein Sensorsignal vom Laserstrahlungssensor empfängt und aus der Laufzeit der emittierten Laserstrahlung (14) die Position des Werkstücktischs (08) in X-Richtung bestimmt und für die Steuerung der Bewegung des Werkstücktisches in X-Richtung bereitstellt.

2. Flachschleifmaschine nach Anspruch 1, **dadurch gekennzeichnet, dass** die Abdeckung (11) des Führungsschachts (09) durch einen oder mehrere Faltenbälge oder durch zueinander verschiebbare Platten gebildet ist.

3. Flachschleifmaschine nach Anspruch 1 oder 2, **dadurch gekennzeichnet, dass** die Schleifscheibe (07) um eine Rotationsachse rotiert, die in einer Y-Richtung verläuft, welche senkrecht zur X-Richtung und senkrecht zur Z-Richtung verläuft, wobei die Schleifscheibe (07) außerdem in dieser Y-Richtung verschiebbar ist.

4. Flachschleifmaschine nach einem der Ansprüche 1 bis 3, **dadurch gekennzeichnet, dass** die Laserstrahlungsquelle und der Laserstrahlungssensor in einem gemeinsamen Gehäuse untergebracht sind, welches im Führungsschacht (09) am Maschinenbett (02) angebracht ist.

5. Flachschleifmaschine nach Anspruch 1, **dadurch gekennzeichnet, dass** die Prozessoreinheit die bestimmte Position in Form eines Tischpositionssignals an eine zentrale Steuereinheit der Flachschleifmaschine liefert.

6. Flachschleifmaschine nach Anspruch 5, **dadurch gekennzeichnet, dass** die zentrale Steuereinheit die Steuerung der Bewegung des Werkstücktisches (08) in der X-Richtung ausführt.

7. Flachschleifmaschine nach einem der Ansprüche 1 bis 6, **dadurch gekennzeichnet, dass** der Tischantrieb durch mehrere Hydraulikzylinder gebildet ist, die an den Werkstücktisch (08) gekoppelt sind.

8. Flachschleifmaschine nach einem der Ansprüche 1 bis 7, **dadurch gekennzeichnet, dass** der Werkstücktisch (08) in der X-Richtung in Gleitführungen geführt ist.

9. Flachschleifmaschine nach einem der Ansprüche 1 bis 8, **dadurch gekennzeichnet, dass** der Werkstücktisch (08) eine Abrichteinheit (17) zum Abrichten der Schleifscheibe (07) trägt.

10. Flachschleifmaschine nach Anspruch 2, **dadurch gekennzeichnet, dass** der oder die mehreren die Abdeckung (11) bildendenden Faltenbälge aus lichtundurchlässigem Material gefertigt sind.

## Claims

1. Surface grinding machine including:
- a machine frame (01), which includes a machine bed (02) with a guiding bay (09) extending in an x-direction;
- a workpiece table (08), which is driven by a table drive and which can be moved back and forth in the guiding bay (09) in the x-direction;
- a rotatable grinding wheel (07), which is positioned above the workpiece table (08) and which is height-adjustable at least in a z-direction perpendicular to the x-direction in order to grind a workpiece (16) clamped on the workpiece table (08);
**characterized in that** the upwards facing opening of the guiding bay (09) is respectively covered on the sides bordering the workpiece table (08) by a cover (11) that allows the movement of the workpiece table (08), **in that** a length measurement unit (12) is mounted on the machine frame (01) in the guiding bay (09) below the plane of the cover (11), which length measurement unit (12) includes a laser radiation source and a laser radiation sensor, and **in that** a reflector (13) is mounted on the workpiece table (08), likewise below the plane of the cover (11), which reflects the laser radiation (14) emitted by the laser radiation source in the guiding bay to the laser radiation sensor, wherein the length measurement unit (12) includes a processor unit which controls the laser radiation source, which receives a sensor signal from the laser radiation sensor, and which determines the position of the workpiece table (08) in the x-direction from the transit time of the emitted laser radiation (14) and provides said position for the control of the movement of the workpiece table in the x-direction.

2. The surface grinding machine according to claim 1, **characterized in that** the cover (11) of the guiding bay (09) is formed by one or more bellows or by plates that can be moved relative to one another.

3. The surface grinding machine according to claim 1 or 2, **characterized in that** the grinding wheel (07) rotates about an axis of rotation that extends in a y-direction perpendicular to the x-direction and perpendicular to the z-direction, wherein the grinding wheel (07) can also be moved in this y-direction.

4. The surface grinding machine according to one of claims 1 to 3, **characterized in that** the laser radiation source and the laser radiation sensor are accommodated in a common housing, which is mounted in the guiding bay (09) on the machine bed (02).

5. The surface grinding machine according to claim 1, **characterized in that** the processor unit supplies the determined position in the form of a table position signal to a central control unit of the surface grinding machine.

6. The surface grinding machine according to claim 5, **characterized in that** the central control unit controls the movement of the workpiece table (08) in the x-direction.

7. The surface grinding machine according to one of claims 1 to 6, **characterized in that** the table drive is formed by a plurality of hydraulic cylinders coupled to the workpiece table (08).

8. The surface grinding machine according to one of claims 1 to 7, **characterized in that** the workpiece table (08) is guided in sliding guides in the x-direction.

9. The surface grinding machine according to any one of claims 1 to 8, **characterized in that** the workpiece table (08) carries a dressing unit (17) for dressing the grinding wheel (07).

10. The surface grinding machine according to claim 2, **characterized in that** the one or more bellows forming the cover (11) are made of a material that is impervious to light.

## Revendications

1. Rectifieuse de surface, pourvue :
- d'un bâti de machine (01), lequel comprend un banc de machine (02) doté d'une goulotte de guidage (09) s'étendant dans la direction X ;
- d'un plateau porte-pièces (08), qui entraîné par un entraînement de plateau, est déplaçable dans la direction X, en va-et-vient dans la goulotte de guidage (09) ;
- d'un disque abrasif (07) rotatif, qui est positionné au-dessus du plateau porte-pièces (08) et qui est ajustable en hauteur, au moins dans une direction Z s'écoulant à la perpendiculaire de la direction X, pour rectifier une pièce (16) susceptible d'être bridée sur le plateau porte-pièces (08) ;
**caractérisée en ce que** l'orifice dirigé vers le haut de la goulotte de guidage (09) est recouvert chaque fois en adjacence latérale au plateau porte-pièces (08) par un recouvrement (11), lequel admet le déplacement du plateau porte-pièces (08), **en ce que** sur le bâti de machine (01), dans la goulotte de guidage (09), en-dessous du niveau du recouvrement (11) est monté un ensemble de mesure longitudinale (12), qui comprend une source de rayonnement laser et un capteur de rayonnement laser et **en ce que** sur le plateau porte-pièces (08), également en-dessous du niveau du recouvrement (11) est monté un réflecteur (13), qui réfléchit le rayonnement laser (14) émis dans la goulotte de guidage par la source de rayonnement laser vers le capteur de rayonnement laser, l'ensemble de mesure longitudinale (12) comprenant une unité de processeur, laquelle active la source de rayonnement laser, réceptionne un signal de capteur de la part du capteur de rayonnement laser et détermine à partir de la période du rayonnement laser (14) émis la position du plateau porte-pièces (08) dans la direction X et la met à disposition pour la commande du déplacement du plateau porte-pièces dans la direction X.

2. Rectifieuse de surface selon la revendication 1, **caractérisée en ce que** le recouvrement (11) de la goulotte de guidage (09) est constitué d'un ou de plusieurs soufflets ou par des plaques coulissantes les unes par rapport aux autres.

3. Rectifieuse de surface selon la revendication 1 ou 2, **caractérisée en ce que** le disque abrasif (07) tourne autour d'un axe de rotation qui s'écoule dans une direction Y, laquelle s'écoule à la perpendiculaire de la direction X et à la perpendiculaire de la direction Z, le disque abrasif (07) étant coulissant par ailleurs dans ladite direction Y.

4. Rectifieuse de surface selon l'une quelconque des revendications 1 à 3, **caractérisée en ce que** la source de rayonnement laser et le capteur de rayonnement laser sont logés dans un carter commun, lequel est monté dans la goulotte de guidage (09) sur le banc de machine (02).

5. Rectifieuse de surface selon la revendication 1, **caractérisée en ce que** l'unité de processeur fournit la position déterminée sous la forme d'un signal de position du plateau à une unité de commande centralisée de la rectifieuse de surface.

6. Rectifieuse de surface selon la revendication 5, **caractérisée en ce que** l'unité de commande centralisée procède à la commande du déplacement du plateau porte-pièces (08) dans la direction X.

7. Rectifieuse de surface selon l'une quelconque des revendications 1 à 6, **caractérisée en ce que** l'entraînement de plateau est constitué de plusieurs vérins hydrauliques, qui sont accouplés sur le plateau porte-pièces (08).

8. Rectifieuse de surface selon l'une quelconque des revendications 1 à 7, **caractérisée en ce que** le plateau porte-pièces (08) est guidé dans la direction X dans des glissières de guidage.

9. Rectifieuse de surface selon l'une quelconque des revendications 1 à 8, **caractérisée en ce que** le plateau porte-pièces (08) porte une unité de dressage (17), pour le dressage du disque abrasif (07).

10. Rectifieuse de surface selon la revendication 2, **caractérisée en ce que** le ou les plusieurs soufflets constituant le recouvrement (11) sont fabriqués dans une matière opaque à la lumière.
